# EUROPEAN PATENT APPLICATION

(11) **EP 4 773 101 A1**
(43) Date of publication of application: **08.07.2026**
(21) Application number: 24858289.2
(22) Date of filing: 12.08.2024
(51) Int. Cl.: G06V 20/40

(54) **VIDEO PROCESSING METHOD, APPARATUS, DEVICE, AND STORAGE MEDIUM**

(30) Priority: 31.08.2023 CN 202311121214
(71) Applicant: Beijing Zitiao Network Technology Co., Ltd., Beijing 100190 (CN)
(72) Inventor: LIU, Ke, Beijing 100028 (CN); XU, Bangzhi, Beijing 100028 (CN); ZHAO, Yuanyuan, Beijing 100028 (CN); HU, Andi, Beijing 100028 (CN); ZHENG, Tong, Beijing 100028 (CN); CAO, Shiqi, Beijing 100028 (CN)
(74) Representative: Isarpatent
(86) International application number: PCT/CN2024/111548
(87) International publication number: WO 2025/044746

(57) **Abstract**

The present invention provides a video processing method, an apparatus, a device, and a storage medium. The method comprises: firstly, obtaining a target video segment, and extracting a video frame feature sequence of the target video segment; then, determining, from the video frame feature sequence, a key frame feature sequence of the target video segment; and based on the video frame feature sequence and the key frame feature sequence, determining a text fragment corresponding to the target video segment. According to embodiments of the present invention, the key frame feature sequence of the target video segment is determined, and the text fragment corresponding to the target video segment is determined in light of the video frame feature sequence and the key frame feature sequence. Because the key frame feature sequence can better reflect a livestreaming viewing assistance action in the target video segment, the text fragment corresponding to the target video segment can be determined more effectively on the basis of the method.

## Description

### CROSS-REFERENCE TO RELATED APPLICATION(S)

The present application claims priority to Chinese Patent Application No. 202311121214.X, filed on August 31, 2023 and entitled "VIDEO PROCESSING METHOD, APPARATUS, AND DEVICE, AND STORAGE MEDIUM", which is incorporated herein by reference in its entirety.

### FIELD

The present disclosure relates to the field of data processing, and in particular, to a video processing method, apparatus, and device, and a storage medium.

### BACKGROUND

With the continuous development of live streaming technologies, live video streaming has gradually become one of main ways for people to obtain information and engage in social entertainment. Accordingly, the number of various types of live streaming rooms is increasing.

For a type of live streaming room for live streaming with sign language, how to effectively determine text content corresponding to a sign language live video is a technical problem that needs to be resolved urgently.

### SUMMARY

To resolve the above-mentioned technical problem, embodiments of the present disclosure provide a processing method of a live video.

According to a first aspect, the present disclosure provides a video processing method. The method includes:
obtaining a target video segment, and extracting a video frame feature sequence of the target video segment;
determining a key frame feature sequence of the target video segment from the video frame feature sequence; and
determining, based on the video frame feature sequence and the key frame feature sequence, a text segment corresponding to the target video segment.

In an optional implementation, the target video segment includes an assistive movement, and the text segment is used to express a meaning of the assistive movement in the target video segment.

In an optional implementation, the video frame feature sequence includes video frame features having a sequential relationship. Determining the key frame feature sequence of the target video segment from the video frame feature sequence includes:
determining N video frame features from the video frame feature sequence as current centroid vectors respectively corresponding to N clusters, where N is a preset natural number; and
determining, using a clustering algorithm, the key frame feature sequence of the target video segment based on the video frame feature sequence and the current centroid vectors respectively corresponding to the N clusters.

In an optional implementation, determining, using the clustering algorithm, the key frame feature sequence of the target video segment based on the video frame feature sequence and the current centroid vectors respectively corresponding to the N clusters includes:
determining Euclidean distances between a first video frame feature in the video frame feature sequence and the current centroid vectors respectively corresponding to the N clusters, and assigning the first video frame feature to a cluster corresponding to a smallest Euclidean distance;
determining a centroid vector of a first cluster among the N clusters as a target centroid vector based on a video frame feature assigned to the first cluster, and determining whether a Euclidean distance between the target centroid vector and a current centroid vector is less than a preset threshold;
updating, in response to determining that the Euclidean distance between the target centroid vector and the current centroid vector is not less than the preset threshold, the target centroid vector to the current centroid vector of the first cluster, and continuing performing the step of determining the Euclidean distances between the first video frame feature in the video frame feature sequence and the current centroid vectors respectively corresponding to the N clusters, until it is determined that the Euclidean distance between the target centroid vector and the current centroid vector is less than the preset threshold; and
determining the key frame feature sequence of the target video segment based on the current centroid vector of the first cluster.

In an optional implementation, determining, based on the video frame feature sequence and the key frame feature sequence, the text segment corresponding to the target video segment includes:
determining, using a target model based on the video frame feature sequence and the key frame feature sequence, the text segment corresponding to the target video segment, where the target model is obtained by performing model training in advance using a video segment sample and a text segment sample that have a correspondence.

In an optional implementation, before determining, using the target model based on the video frame feature sequence and the key frame feature sequence, the text segment corresponding to the target video segment, the method further includes:
obtaining the video segment sample and the text segment sample that have the correspondence;
extracting a video frame feature sequence of the video segment sample using a feature extraction module, and determining a key frame feature sequence of the video segment sample from the video frame feature sequence;
performing feature fusion on the video frame feature sequence and the key frame feature sequence using an encoder, to obtain a fused feature sequence, and inputting the fused feature sequence into a decoder;
generating, using the decoder, a predicted text segment based on the fused feature sequence, and determining a loss value by comparing the predicted text segment with the text segment sample, where the loss value is used to update model parameters of the feature extraction module, the encoder, and the decoder through backpropagation; and
obtaining the trained target model after a model parameter that minimizes the loss value is determined, where the target model includes the encoder and the decoder.

In an optional implementation, the method is applied to a live streaming server. Obtaining the target video segment includes:
obtaining a live video segment from a live video stream of a target live streaming room as the target video segment.

Accordingly, after determining, based on the video frame feature sequence and the key frame feature sequence, the text segment corresponding to the target video segment, the method further includes:
sending the text segment corresponding to the target video segment to a client corresponding to the target live streaming room, where the text segment is used to be displayed as subtitles on a live streaming room page of the target live streaming room.

In an optional implementation, after determining, based on the video frame feature sequence and the key frame feature sequence, the text segment corresponding to the target video segment, the method further includes:
converting the text segment corresponding to the target video segment into a speech segment, and sending the speech segment to the client corresponding to the target live streaming room, where the speech segment is used to be played synchronously with the target video segment in the target live streaming room.

In an optional implementation, after determining, based on the video frame feature sequence and the key frame feature sequence, the text segment corresponding to the target video segment, the method further includes:
determining a live streaming effect corresponding to the text segment, where the live streaming effect is used to be presented on the live streaming room page of the target live streaming room.

According to a second aspect, the present disclosure provides a video processing apparatus. The apparatus includes:
a video obtaining module configured to obtain a target video segment;
a first feature extraction module configured to extract a video frame feature sequence of the target video segment;
a first determination module configured to determine a key frame feature sequence of the target video segment from the video frame feature sequence; and
a second determination module configured to determine, based on the video frame feature sequence and the key frame feature sequence, a text segment corresponding to the target video segment.

According to a third aspect, the present disclosure provides a computer-readable storage medium having instructions stored therein that, when executed on a terminal device, cause the terminal device to implement the method described above.

According to a fourth aspect, the present disclosure provides a live video processing device. The device includes: a memory, a processor, and a computer program that is stored on the memory and executable on the processor, where the processor, when executing the computer program, implements the method described above.

According to a fifth aspect, the present disclosure provides a computer program product. The computer program product includes a computer program or instructions. The computer program or instructions, when executed by a processor, cause the method described above to be implemented.

### BRIEF DESCRIPTION OF THE DRAWINGS

The accompanying drawings herein, which are incorporated into and form a part of the description, illustrate the embodiments in line with the present disclosure and are used in conjunction with the description to explain the principles of the present disclosure.

In order to more clearly illustrate the technical solutions in the embodiments of the present disclosure or in the related art, the accompanying drawings for describing the embodiments or the related art will be briefly described below. Apparently, those of ordinary skill in the art may still derive other drawings from these accompanying drawings without creative efforts.
FIG. 1 is a flowchart of a video processing method according to an embodiment of the present disclosure;
FIG. 2 is a schematic diagram of training for a target model according to an embodiment of the present disclosure;
FIG. 3 is a schematic structural diagram of a video processing apparatus according to an embodiment of the present disclosure; and
FIG. 4 is a schematic structural diagram of a video processing device according to an embodiment of the present disclosure.

### DETAILED DESCRIPTION OF EMBODIMENTS

For a clearer understanding of the above-mentioned objectives, features and advantages of the present disclosure, the solutions of the present disclosure will be further described below. It is to be noted that the embodiments of the present disclosure and features in the embodiments may be combined with each other without conflict.

Many specific details are set forth in the following description to facilitate a full understanding of the present disclosure. However, the present disclosure may also be implemented in other ways different from those described herein. Apparently, the embodiments in the description are only some rather than all of the embodiments of the present disclosure.

With the continuous development of live streaming technologies, live video streaming has gradually become one of main ways for people to obtain information and engage in social entertainment. Accordingly, the number of various types of live streaming rooms is increasing, such as a type of live streaming room where a live streamer performs a live stream using sign language. For the type of live streaming room where the live streamer performs the live stream using sign language, how to effectively determine text content corresponding to a sign language live video is a technical problem that needs to be resolved urgently.

Therefore, an embodiment of the present disclosure provides a video processing method. The method includes: first, obtaining a target video segment, and extracting a video frame feature sequence of the target video segment; then, determining a key frame feature sequence of the target video segment from the video frame feature sequence; and determining, based on the video frame feature sequence and the key frame feature sequence, a text segment corresponding to the target video segment. According to this embodiment of the present disclosure, the key frame feature sequence of the target video segment is determined, and the text segment corresponding to the target video segment is determined based on the video frame feature sequence and the key frame feature sequence. Because the key frame feature sequence can better reflect a sign language movement in the target video segment, a text segment corresponding to a sign language video can be determined more effectively according to the above-mentioned method.

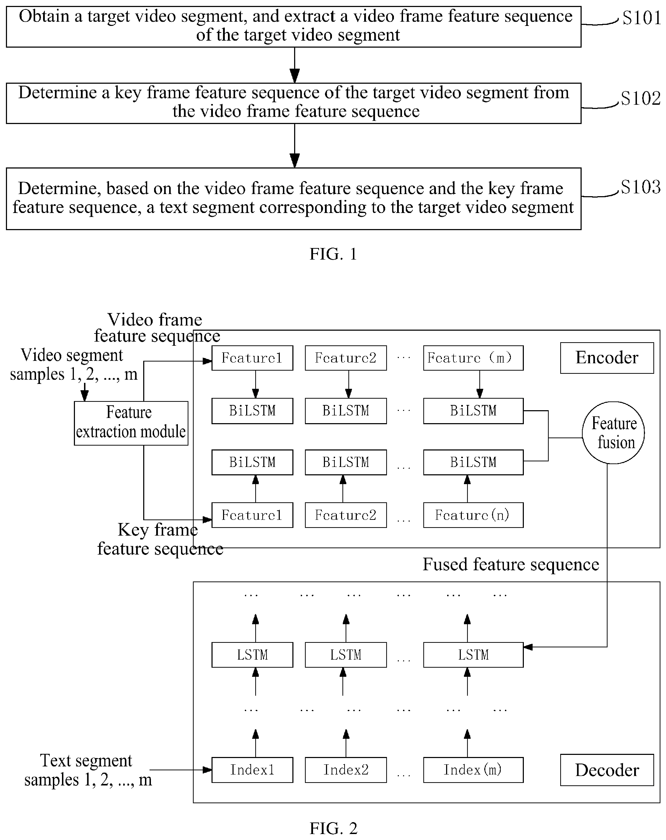

Based on this, an embodiment of the present disclosure provides a video processing method. FIG. 1 is a flowchart of a video processing method according to an embodiment of the present disclosure. The method, for example, includes the following steps.

S101: a target video segment is obtained, and extract a video frame feature sequence of the target video segment is extracted.

The video processing method according to this embodiment of the present disclosure may be applied to a server, where the server may include a cloud server, a local server, etc.

The target video segment in this embodiment of the present disclosure includes an assistive movement, and may be a video segment including assistive movement content. For example, the assistive movement may be a sign language movement, and the target video segment is also referred to as a sign language video segment.

In an optional implementation, the target video segment may be a video segment in a live video stream. As an example, the target video segment may be a sign language video segment in a sign language live video stream. That is, when a live streamer in a live streaming room performs a live stream with sign language movements, the sign language live video stream may be obtained. When the live streamer in the live streaming room performs the live stream with the sign language movements, the sign language of the live streamer may assist a viewer watching the live stream to understand content of the live stream of the live streamer.

In this embodiment of the present disclosure, after the target video segment is obtained, for each frame of video image in the target video segment, an image feature of the video image is extracted, to form the video frame feature sequence of the target video segment. The video frame feature sequence includes image features of video images having a sequential relationship.

It is assumed that the target video segment is a sign language video segment V whose video frame feature sequence is *f = feature*₁*, feature*₂*, ... , featureₙ,* where n is a total number of frames of the sign language video segment V, and *featureᵢ* is an image feature of an i^{th} video image in the sign language video segment V.

In an optional implementation, a trained feature extraction model may be used to extract the video frame feature sequence of the target video segment. The feature extraction model may be implemented based on a three-dimensional convolutional residual neural network model (3D-ResNet).

S102: a key frame feature sequence of the target video segment is determined from the video frame feature sequence.

In order to determine a text segment corresponding to the sign language video segment more effectively, according to this embodiment of the present disclosure, not only the video frame feature sequence of the target video segment but also the key frame feature sequence of the target video segment may be extracted for determining the text segment corresponding to the sign language video segment.

The key frame feature sequence may include an image feature of a key frame image in the target video segment. For example, the key frame image may be a video image in the sign language video segment that includes the sign language movement.

In an optional implementation, after the video frame feature sequence of the target video segment is extracted, the key frame feature sequence is obtained from the video frame feature sequence. As an example, a clustering algorithm may be used to determine the key frame feature sequence from the video frame feature sequence. A specific implementation of the clustering algorithm is not limited herein, for example, may be a K-means algorithm.

In an optional implementation, after the video frame feature sequence of the target video segment is extracted, N video frame features are first determined from the video frame feature sequence as initial centroid vectors respectively corresponding to N clusters, also referred to as current centroid vectors. N is a natural number set based on requirements. Optionally, N may be determined based on the total number of frames of the video frame feature sequence. N is directly proportional to the total number of frames: the larger the total number of frames, the larger N is set correspondingly; and conversely, the smaller the total number of frames, the smaller N is set correspondingly. It is assumed that N is set to 32.

After the current centroid vectors respectively corresponding to the N clusters are determined, the clustering algorithm is used to determine the key frame feature sequence of the target video segment based on the video frame feature sequence and the current centroid vectors respectively corresponding to the N clusters.

In an optional implementation, for any video frame feature (assumed to be a first video frame feature) in the video frame feature sequence, Euclidean distances between the first video frame feature and the current centroid vectors respectively corresponding to the N clusters are calculated, and the first video frame feature is assigned to a cluster (assumed to be a j^{th} cluster) corresponding to a smallest Euclidean distance among the Euclidean distances.

After assignment of each video frame feature in the video frame feature sequence is completed, for any cluster (assumed to be a first cluster) among the N clusters, a centroid vector of the first cluster is recalculated as a target centroid vector based on each video frame feature assigned to the first cluster, and it is determined whether a Euclidean distance between the target centroid vector and a current centroid vector of the first cluster is less than a preset threshold. If the Euclidean distance is not less than the preset threshold, the target centroid vector is determined as the current centroid vector of the first cluster. As an example, determining whether the Euclidean distance between the target centroid vector and the current centroid vector of the first cluster is less than the preset threshold may be the same as determining whether the Euclidean distance between the target centroid vector and the current centroid vector of the first cluster is less than the preset threshold.

In the above-mentioned manner, after a current centroid vector of each of the N clusters is updated, clustering calculation is performed again. To be specific, for each video frame feature in the video frame feature sequence, a cluster corresponding to a current centroid vector with a smallest Euclidean distance to the video frame feature is obtained through recalculation, and when it is determined that the recalculated Euclidean distance between the target centroid vector and the current centroid vector is less than the preset threshold, updating of the current centroid vector of the cluster is stopped.

After updating of the current centroid vector corresponding to each of the N clusters is stopped, the key frame feature sequence of the target video segment is determined based on the current centroid vector of each cluster. As an example, the current centroid vectors of the clusters form the key frame feature sequence of the target video segment based on a sequential relationship between the clusters.

For ease of understanding, it is assumed that the current centroid vectors respectively corresponding to the N clusters are u₁, u₂, ... , uₙ , the video frame feature sequence is *f = feature*₁, *feature*₂*,* ..., *featureₘ,* and a Euclidean distance between the i^{th} video frame feature and a current centroid vector of the j^{th} cluster is *dᵢ* =∥ *featureᵢ - uⱼ* ∥. After a Euclidean distance between the i^{th} video frame feature and the current centroid vector of each cluster is calculated, the i^{th} video frame feature is assigned to a cluster corresponding to a smallest Euclidean distance.

For each cluster, a centroid vector is recalculated based on each video frame feature assigned to the cluster. A specific manner for calculating the centroid vector is not limited. For a cluster whose recalculated centroid vector is the same as the current centroid vector, the current centroid vector of the cluster is no longer updated.

If finally determined current centroid vectors respectively corresponding to the N clusters are u₁' , u₂', ..., uₙ', u₁' , u₂' , ... , uₙ' are determined as the key frame feature sequence of the target video segment.

S103: a text segment corresponding to the target video segment is determined based on the video frame feature sequence and the key frame feature sequence.

The text segment is used to express a meaning of the sign language movement in the target video segment.

In this embodiment of the present disclosure, after the video frame feature sequence and the key frame feature sequence of the target video segment are obtained, the text segment corresponding to the target video segment is determined based on the video frame feature sequence and the key frame feature sequence, that is, a text segment corresponding to the sign language movement included in the target video segment is determined.

In an optional implementation, a pre-trained target model may be used to determine, based on the video frame feature sequence and the key frame feature sequence, the text segment corresponding to the target video segment.

As an example, the target model may be a sign language recognition model. FIG. 2 is a schematic diagram of training for a target model according to an embodiment of the present disclosure.

First, a large number of video segment samples and text segment samples that have correspondences are obtained. Then, video frame feature sequences of the video segment samples are extracted using a feature extraction module, and key frame feature sequences of the video segment samples are determined from the video frame feature sequences. Further, feature fusion is performed on the video frame feature sequences and the key frame feature sequences using an encoder, to obtain fused feature sequences, where the fused feature sequences can highlight the key frame feature sequences through the video frame feature sequences, so that the fused feature sequences can better reflect features of sign language movements in sign language video segments.

After obtaining the fused feature vector (sequences), the encoder inputs the fused feature sequence into a decoder. The decoder generates a predicted text segment based on the fused feature sequence. A loss value is determined by comparing the predicted text segment with a ground truth text segment sample, where the loss value is used to update model parameters of the feature extraction module, the encoder, and the decoder through backpropagation.

After training with the large number of video segment samples and text segment samples that have the correspondences, the trained target model is obtained after a model parameter that minimizes the loss value is determined. As an example, the target model may include a trained encoder and decoder.

In this embodiment of the present disclosure, the fused feature sequence is input into the decoder. The decoder is configured to decode a feature vector in the fused feature sequence using a long short-term memory (LSTM) model, to generate a text sequence for image description, i.e., the predicted text segment. After the decoder obtains the predicted text segment, the predicted text segment is compared with the corresponding text segment sample to obtain the loss value through calculation with a loss function. Then, the model parameters such as weight parameters, including weight parameters of the encoder and the decoder, etc., are updated through backpropagation based on the loss function.

In a model prediction (also referred to as model inference) phase, the video frame feature sequence of the target video segment is extracted using the trained feature extraction module, and the key frame feature sequence of the target video segment is determined from the video frame feature sequence. Then, feature fusion is performed on the video frame feature sequence and the key frame feature sequence via the trained encoder, to obtain the fused feature sequence, and the fused feature sequence is input into the trained decoder. The decoder generates, based on the fused feature sequence, the text segment as the text segment corresponding to the target video segment.

The video processing method according to this embodiment of the present disclosure includes: first, obtaining the target video segment, and extracting the video frame feature sequence of the target video segment; then, determining the key frame feature sequence of the target video segment from the video frame feature sequence; and determining, based on the video frame feature sequence and the key frame feature sequence, the text segment corresponding to the target video segment. The text segment is used to express the meaning of the sign language movement in the target video segment. According to this embodiment of the present disclosure, the key frame feature sequence of the target video segment is determined, and the text segment corresponding to the target video segment is determined based on the video frame feature sequence and the key frame feature sequence. Because the key frame feature sequence can better reflect the sign language movement in the target video segment, a text segment corresponding to a sign language video can be determined more effectively according to the above-mentioned method.

On the basis of the above-mentioned embodiments, an embodiment of the present disclosure provide a specific application scenario of the video processing method. As an example, the video processing method can be applied to a live streaming scenario of a target live streaming room. The target live streaming room is a type of live streaming room where a live streamer performs a live stream using sign language.

The target video segment may be a live video segment in a live video stream of the target live streaming room.

In practical applications, during the live stream in the target live streaming room, a live streaming server obtains the live video segment from the live video stream of the target live streaming room as the target video segment. In the video processing method according to this embodiment of the present disclosure, a text segment corresponding to each live video segment in the live video stream of the target live streaming room is determined in sequence, and the text segment is returned to a client corresponding to the target live streaming room in chronological order.

In an optional implementation, after the text segment corresponding to the target video segment is determined, the text segment is sent to the client corresponding to the target live streaming room. The text segment is used to be displayed as subtitles on a live streaming room page of the target live streaming room.

In another optional implementation, the text segment corresponding to the target video segment is converted into a speech segment, the speech segment is sent to the client corresponding to the target live streaming room, and the speech segment is played synchronously with the target video segment in the target live streaming room.

In another optional implementation, after the text segment corresponding to the target video segment is determined, a live streaming effect corresponding to the text segment is determined, and the live streaming effect is presented on the live streaming room page of the target live streaming room.

On the live streaming room page of the target live streaming room, the subtitles are presented, speech is played synchronously, and the live streaming effect is presented, such that a presentation effect of the live streaming room where the streamer performs a live stream using sign language can be improved, thereby improving experience of a viewer of the live stream.

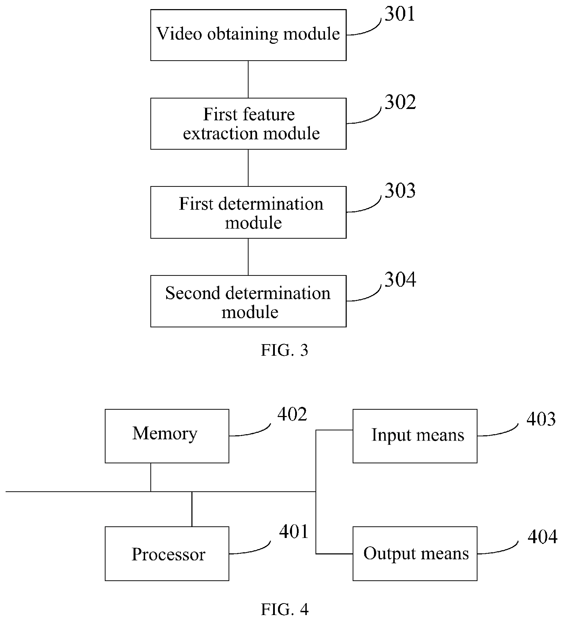

Based on the above-mentioned method embodiment, the present disclosure further provides a video processing apparatus. FIG. 3 is a schematic structural diagram of a video processing apparatus according to an embodiment of the present disclosure. The apparatus includes:
a video obtaining module 301 configured to obtain a target video segment;
a first feature extraction module 302 configured to extract a video frame feature sequence of the target video segment;
a first determination module 303 configured to determine a key frame feature sequence of the target video segment from the video frame feature sequence; and
a second determination module 304 configured to determine, based on the video frame feature sequence and the key frame feature sequence, a text segment corresponding to the target video segment.

In an optional implementation, the target video segment includes an assistive movement, and the text segment is used to express a meaning of the assistive movement in the target video segment. That is, the text segment may be used to explain the assistive movement, helping a user understand the meaning of the assistive movement.

In an optional implementation, the video frame feature sequence includes video frame features having a sequential relationship. The first determination module includes:
a first determination sub-module configured to determine N video frame features from the video frame feature sequence as current centroid vectors respectively corresponding to N clusters, where N is a preset natural number; and
a second determination sub-module configured to determine, using a clustering algorithm, the key frame feature sequence of the target video segment based on the video frame feature sequence and the current centroid vectors respectively corresponding to the N clusters.

In an optional implementation, the first determination module includes:
a third determination sub-module configured to determine Euclidean distances between a first video frame feature in the video frame feature sequence and the current centroid vectors respectively corresponding to the N clusters, and assign the first video frame feature to a cluster corresponding to a smallest Euclidean distance;
a fourth determination sub-module configured to determine a centroid vector of a first cluster among the N clusters as a target centroid vector based on a video frame feature assigned to the first cluster, and determine whether a Euclidean distance between the target centroid vector and a current centroid vector is less than a preset threshold;
an update sub-module configured to update, in response to determining that the Euclidean distance between the target centroid vector and the current centroid vector is not less than the preset threshold, the target centroid vector to the current centroid vector of the first cluster, and continuing performing the step of calculating the Euclidean distances between the first video frame feature in the video frame feature sequence and the current centroid vectors respectively corresponding to the N clusters, until it is determined that the Euclidean distance between the target centroid vector and the current centroid vector is less than the preset threshold; and
a fifth determination sub-module configured to determine the key frame feature sequence of the target video segment based on the current centroid vector of the first cluster.

In an optional implementation, the second determination module is, for example, configured to: determine, using a target model based on the video frame feature sequence and the key frame feature sequence, the text segment corresponding to the target video segment.

In an optional implementation, the apparatus further includes:
a sample obtaining module configured to obtain a video segment sample and a text segment sample that have a correspondence;
a second feature extraction module configured to extract a video frame feature sequence of the video segment sample using a feature extraction module, and determine a key frame feature sequence of the video segment sample from the video frame feature sequence;
a feature fusion module configured to perform feature fusion on the video frame feature sequence and the key frame feature sequence using an encoder, to obtain a fused feature sequence, and input the fused feature sequence into a decoder;
a loss value calculation module configured to generate, using the decoder, a predicted text segment based on the fused feature sequence, and determine a loss value by comparing the predicted text segment with the text segment sample, where the loss value is used to update model parameters of the feature extraction module, the encoder, and the decoder through backpropagation; and
a model obtaining module configured to obtain the trained target model after a model parameter that minimizes the loss value is determined, where the target model may include the encoder and/or the decoder.

In an optional implementation, the apparatus is applied to a live streaming server. The video obtaining module is, for example, configured to:
obtain a live video segment from a live video stream of a target live streaming room as the target video segment.

Accordingly, the apparatus further includes:
a first sending module configured to send the text segment corresponding to the target video segment to a client corresponding to the target live streaming room, where the text segment is used to be displayed as subtitles on a live streaming room page of the target live streaming room.

In an optional implementation, the apparatus further includes:
a speech conversion module configured to convert the text segment corresponding to the target video segment into a speech segment, and send the speech segment to the client corresponding to the target live streaming room, where the speech segment is used to be played synchronously with the target video segment in the target live streaming room.

In an optional implementation, the apparatus further includes:
an effect determination module configured to determine a live streaming effect corresponding to the text segment, where the live streaming effect is used to be presented on the live streaming room page of the target live streaming room.

The video processing apparatus according to this embodiment of the present disclosure first obtains the target video segment, and extracts the video frame feature sequence of the target video segment; then, determines the key frame feature sequence of the target video segment from the video frame feature sequence; and determines, based on the video frame feature sequence and the key frame feature sequence, the text segment corresponding to the target video segment. According to this embodiment of the present disclosure, the key frame feature sequence of the target video segment is determined, and the text segment corresponding to the target video segment is determined based on the video frame feature sequence and the key frame feature sequence. Because the key frame feature sequence can better reflect the sign language movement in the target video segment, a text segment corresponding to a sign language video can be determined more effectively according to the above-mentioned method.

In addition to the method and apparatus described above, an embodiment of the present disclosure further provides a computer-readable storage medium having instructions stored therein that, when executed on a terminal device, cause the terminal device to implement the processing method of the live video described in the embodiments of the present disclosure.

An embodiment of the present disclosure further provides a computer program product. The computer program product includes a computer program or instructions. The computer program or instructions, when executed by a processor, cause the processing method of the live video described in the embodiments of the present disclosure to be implemented.

In addition, an embodiment of the present disclosure further provides a video processing device. As shown in FIG. 4, the device may include:
a processor 401, a memory 402, an input means 403, and an output means 404, where there may be one or more processors 401 in the video processing device, for example, there is one processor in FIG. 4; and in some embodiments of the present disclosure, the processor 401, the memory 402, the input means 403, and the output means 404 may be connected through a bus or in another manner, for example, are connected through the bus in FIG. 4.

The memory 402 may be configured to store a software program and a module. The processor 401 performs various functional applications of the video processing device and processes data by running the software program and the module stored in the memory 402. The memory 402 may mainly include a program storage area and a data storage area. The program storage area may store an operating system, an application required by at least one function, and the like. In addition, the memory 402 may include a high-speed random-access memory, and may further include a non-volatile memory, such as at least one magnetic disk storage device, a flash memory device, or other volatile solid-state storage devices. The input means 403 may be configured to receive entered numerical or character information, and generate a signal input related to a user setting and function control of the video processing device.

As an example, in this embodiment, the processor 401 loads an executable file corresponding to a process of one or more applications into the memory 402 in accordance with the following instructions, and the processor 401 runs the application stored in the memory 402, to implement various functions of the above-mentioned video processing device.

It is to be noted that the relational terms such as "first" and "second" herein are only used to distinguish one entity or operation from another, and do not necessarily require or imply that any actual relationship or sequence exists between these entities or operations. Moreover, the terms "include", "including", "comprise" and "comprising", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The above-mentioned description illustrates merely specific implementations of the present disclosure, so that those skilled in the art can understand or implement the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments described herein, but extends to the widest scope that complies with the principles and novelty disclosed in this specification.

## Claims

1. A video processing method, comprising:
obtaining a target video segment, and extracting a video frame feature sequence of the target video segment;
determining a key frame feature sequence of the target video segment from the video frame feature sequence; and
determining, based on the video frame feature sequence and the key frame feature sequence, a text segment corresponding to the target video segment.

2. The method according to claim 1, wherein the target video segment comprises an assistive movement, and the text segment is used to express a meaning of the assistive movement in the target video segment.

3. The method according to claim 1, wherein the video frame feature sequence comprises video frame features having a sequential relationship; and determining the key frame feature sequence of the target video segment from the video frame feature sequence comprises:
determining N video frame features from the video frame feature sequence as current centroid vectors respectively corresponding to N clusters, wherein N is a preset natural number; and
determining, using a clustering algorithm, the key frame feature sequence of the target video segment based on the video frame feature sequence and the current centroid vectors respectively corresponding to the N clusters.

4. The method according to claim 3, wherein determining, using the clustering algorithm, the key frame feature sequence of the target video segment based on the video frame feature sequence and the current centroid vectors respectively corresponding to the N clusters comprises:
determining Euclidean distances between a first video frame feature in the video frame feature sequence and the current centroid vectors respectively corresponding to the N clusters, and assigning the first video frame feature to a cluster corresponding to a smallest Euclidean distance;
determining a centroid vector of a first cluster among the N clusters as a target centroid vector based on a video frame feature assigned to the first cluster, and determining whether a Euclidean distance between the target centroid vector and a current centroid vector is less than a preset threshold;
updating, in response to determining that the Euclidean distance between the target centroid vector and the current centroid vector is not less than the preset threshold, the target centroid vector to the current centroid vector of the first cluster, and continuing performing the step of determining the Euclidean distances between the first video frame feature in the video frame feature sequence and the current centroid vectors respectively corresponding to the N clusters, until it is determined that the Euclidean distance between the target centroid vector and the current centroid vector is less than the preset threshold; and
determining the key frame feature sequence of the target video segment based on the current centroid vector of the first cluster.

5. The method according to claim 1, wherein determining, based on the video frame feature sequence and the key frame feature sequence, the text segment corresponding to the target video segment comprises:
determining, using a target model based on the video frame feature sequence and the key frame feature sequence, the text segment corresponding to the target video segment.

6. The method according to claim 5, wherein prior to determining, using the target model based on the video frame feature sequence and the key frame feature sequence, the text segment corresponding to the target video segment, the method further comprises:
obtaining a video segment sample and a text segment sample that have a correspondence;
extracting a video frame feature sequence of the video segment sample using a feature extraction module, and determining a key frame feature sequence of the video segment sample from the video frame feature sequence;
performing feature fusion on the video frame feature sequence and the key frame feature sequence using an encoder, to obtain a fused feature sequence, and inputting the fused feature sequence into a decoder;
generating, using the decoder, a predicted text segment based on the fused feature sequence, and determining a loss value by comparing the predicted text segment with the text segment sample, wherein the loss value is used to update model parameters of the feature extraction module, the encoder, and the decoder through backpropagation; and
obtaining the trained target model after a model parameter that minimizes the loss value is determined, wherein the target model comprises the encoder and the decoder.

7. The method according to claim 1, wherein the method is applied to a live streaming server, and obtaining the target video segment comprises:
obtaining a live video segment from a live video stream of a target live streaming room as the target video segment; and
correspondingly, after determining, based on the video frame feature sequence and the key frame feature sequence, the text segment corresponding to the target video segment, the method further comprises:
sending the text segment corresponding to the target video segment to a client corresponding to the target live streaming room, wherein the text segment is used to be displayed as subtitles on a live streaming room page of the target live streaming room.

8. The method according to claim 7, wherein after determining, based on the video frame feature sequence and the key frame feature sequence, the text segment corresponding to the target video segment, the method further comprises:
converting the text segment corresponding to the target video segment into a speech segment, and sending the speech segment to the client corresponding to the target live streaming room, wherein the speech segment is used to be played synchronously with the target video segment in the target live streaming room.

9. The method according to claim 7, wherein after determining, based on the video frame feature sequence and the key frame feature sequence, the text segment corresponding to the target video segment, the method further comprises:
determining a live streaming effect corresponding to the text segment, wherein the live streaming effect is used to be presented on the live streaming room page of the target live streaming room.

10. A video processing apparatus, comprising:
a video obtaining module configured to obtain a target video segment;
a first feature extraction module configured to extract a video frame feature sequence of the target video segment;
a first determination module configured to determine a key frame feature sequence of the target video segment from the video frame feature sequence; and
a second determination module configured to determine, based on the video frame feature sequence and the key frame feature sequence, a text segment corresponding to the target video segment.

11. A computer-readable storage medium having instructions stored therein that, when executed on a terminal device, cause the terminal device to implement the method according to any one of claims 1 to 9.

12. A video processing device, comprising: a memory, a processor, and a computer program that is stored on the memory and executable on the processor, wherein the processor, when executing the computer program, implements the method according to any one of claims 1 to 9.
